# FASCICULE DE BREVET EUROPEEN

(11) **EP 0 691 658 B1**
(45) Date de publication et mention de la délivrance du brevet: **27.08.1997**
(21) Numéro de dépôt: 95401514.5
(22) Date de dépôt: 26.06.1995
(51) Int. Cl.: G21C 13/036

(54) **Procédé de remplacement d'un tube de traversée du fond de la cuve d'un réacteur nucléaire refroidi par de l'eau sous pression**
Verfahren zum Ersetzen einer Rohrdurchführung im Boden des Druckgefüsses eines druckwassergekühlten Kernreaktors
Method for replacing a tube crossing of a pressurised water nuclear reactor vessel bottom

(30) Priorité: 07.07.1994 FR 9408426
(43) Date de publication de la demande: 10.01.1996
(73) Titulaire: FRAMATOME, 92400 Courbevoie (FR); ELECTRICITE DE FRANCE Service National, 75008 Paris (FR)
(72) Inventeur: Roux, Philippe, F-69450 Saint Cyr au Mont d'Or (FR)
(74) Mandataire: Bouget, Lucien

(56) Documents cités:
- EP-A- 0 019 908
- EP-A- 0 565 380
- EP-A- 0 595 143
- US-A- 5 267 279
- DATABASE WPI Section Ch, Week 9021 Derwent Publications Ltd., London, GB; Class KO5, AN 90-158762 & JP-A-02 098 696

## Description

L'invention est relative à un procédé de remplacement d'un tube fixé dans une ouverture de traversée d'un fond de forme bombée de la cuve d'un réacteur nucléaire refroidi par de l'eau sous pression.

Les réacteurs nucléaires à eau sous pression comportent une cuve renfermant le coeur du réacteur qui est plongé dans l'eau sous pression de refroidissement du réacteur.

La cuve du réacteur de forme générale cylindrique comporte un fond bombé de forme généralement hémisphérique et un couvercle également de forme hémisphérique pour assurer la fermeture de la partie supérieure de la cuve.

Le fond bombé de la cuve est percé d'ouvertures ayant une direction parallèle à l'axe de la cuve, dans chacune desquelles est fixée par soudure une pièce tubulaire de traversée du fond de cuve de direction axiale.

Ces pièces tubulaires de traversée ou pénétrations de fond de cuve comportent une extrémité en saillie sous le fond bombé de la cuve qui est reliée à un conduit de mesure permettant de joindre le fond de la cuve à une salle d'instrumentation disposée dans la structure du bâtiment du réacteur. Les pénétrations de fond de cuve comportent également une partie en saillie au-dessus du fond bombé, à l'intérieur de la cuve qui est destinée à venir s'engager avec jeu à l'intérieur d'un canal de guidage des équipements internes inférieurs du réacteur qui sont montés à l'intérieur de la cuve et qui assurent le maintien des assemblages du coeur.

Chacun des ensembles de guidage constitués par un conduit de mesure, une pénétration du fond de cuve de forme tubulaire et le canal de guidage correspondant des équipements internes inférieurs assure le passage d'un doigt de gant dans lequel peut être introduite une sonde permettant d'effectuer des mesures à l'intérieur du coeur, telles que des mesures de flux neutronique ou de température, pendant le fonctionnement du réacteur.

De manière à accroître la fiabilité et la sûreté de fonctionnement des réacteurs nucléaires et pour prolonger la durée de vie de ces réacteurs, les exploitants sont amenés à effectuer des contrôles de plus en plus nombreux des différents éléments constituant le réacteur nucléaire. Lorsque des détériorations ou des défauts tels que des fissures sont décelés sur un élément du réacteur nucléaire, suivant la gravité de ce défaut, on peut effectuer éventuellement une réparation, une mise hors service ou un remplacement de l'élément défectueux.

En particulier, on effectue périodiquement, le contrôle de l'état des pénétrations de traversée du fond de cuve pour s'assurer de l'intégrité de ces pièces, après un certain temps de fonctionnement du réacteur, en particulier dans la zone où les pénétrations de fond de cuve sont soudées sur le fond de la cuve.

Les pénétrations de fond de cuve sont généralement réalisées en un alliage de nickel, si bien que, pour réaliser leur fixation par soudure sur le fond de cuve, il est nécessaire de déposer dans le fond d'un chanfrein autour de l'ouverture de traversée du fond de cuve, une couche d'alliage de nickel pour assurer la liaison du métal de soudure avec le fond de cuve. Le métal de soudure constitué par un alliage de nickel est déposé dans le chanfrein, autour de la pénétration de fond de cuve.

Le dépôt du métal de soudage au contact de la pénétration de fond de cuve produit un échauffement de cette pénétration qui peut être relativement important.

Dans le cas où la pénétration de fond de cuve est réalisée dans certaines nuances d'alliage de nickel, on peut craindre une fissuration des pénétrations de fond de cuve, dans la zone de soudure, après un certain temps d'utilisation du réacteur nucléaire.

Dans le cas où un défaut est décelé sur la surface interne, sur la surface externe ou sur la soudure d'une pénétration de fond de cuve, on évalue la gravité et la profondeur de ce défaut et l'on effectue éventuellement une réparation du défaut, par exemple en réalisant un alésage sur une certaine profondeur du métal de la pénétration dans la zone fissurée suivi ou non d'une protection de la zone affouillée, par dépôt d'un métal de réparation ou la pose d'une manchette.

Dans certains cas, il est préférable de réaliser un remplacement complet de la pénétration de fond de cuve plutôt qu'une réparation.

En effet, dans le cas d'un remplacement, il est possible de garantir une parfaite intégrité de la pièce de remplacement et d'autre part, il est possible également de remplacer la pièce défectueuse en alliage de nickel sensible à la fissuration, par une pièce en un alliage perfectionné peu ou pas sensible à la corrosion fissurante, à l'intérieur du réacteur nucléaire.

On a proposé et envisagé divers procédés de remplacement d'une pénétration de fond de cuve d'un réacteur nucléaire consistant à supprimer la liaison soudée entre la pénétration défectueuse et le fond de la cuve, par usinage, à extraire la pénétration de fond de cuve défectueuse de l'ouverture de traversée du fond de la cuve et à fixer par soudure une pénétration de fond de cuve dans l'ouverture de traversée.

Tous les procédés envisagés jusqu'ici présentent des inconvénients, du fait de la difficulté de mise en oeuvre des opérations de soudage de la pièce de remplacement, des difficultés de contrôle des soudures effectuées et des interactions entre la soudure et la pièce de remplacement, pendant le soudage et pendant le refroidissement du métal de soudure.

Dans le EP-A-0.595.143, on a proposé de fixer un tube de traversée de remplacement dans une paroi bombée par l'intermédiaire d'une manchette qui est engagée dans une partie réalésée de l'ouverture de traversée du tube à remplacer puis soudée sur la paroi bombée. Le tube de traversée est vissé dans l'alésage de la manchette et soudé à la manchette. Ce procédé nécessite de réaliser une soudure entre la manchette et la paroi bombée, suivant une surface gauche, ce qui présente des difficultés.

Dans le EP-A-0.019.908, on a proposé une pièce de traversée et de fixation d'un tube dans une paroi de forme bombée, constituée par une coquille hémisphérique qui est fixée par soudure dans une ouverture de la paroi. Le tube est lui-même fixé dans une ouverture traversant la paroi de la coquille, généralement par l'intermédiaire d'une pièce de raccordement. Un tel dispositif n'est pas adapté au cas d'une traversée du fond de la cuve d'un réacteur nucléaire à eau sous pression ; dans ce cas, en effet la pièce de traversée est soumise à une très forte pression. En outre, l'utilisation de la pièce de traversée suivant le EP-A-0.019.908 n'est pas envisagée dans le cadre du remplacement d'un tube traversant la paroi bombée.

Le but de l'invention est donc de proposer un procédé de remplacement d'un tube fixé dans une ouverture de traversée du fond de la cuve d'un réacteur nucléaire refroidi par de l'eau sous pression, consistant à supprimer la liaison entre le tube à remplacer et le fond de la cuve, à extraire le tube à remplacer de l'ouverture de traversée du fond de la cuve, à fixer une coquille présentant une surface externe convexe et une surface interne concave ayant sensiblement la forme de calottes sphériques, sur le fond de la cuve et à fixer sur la coquille creuse un tube de remplacement traversant l'ouverture, ce procédé permettant de réaliser de manière simple et avec une parfaite qualité d'exécution, le soudage du tube de remplacement, quelle que soit sa position sur le fond bombé de la cuve, de contrôler les soudures réalisées et d'obtenir une fixation de très grande qualité du tube de remplacement.

Dans ce but, après l'extraction du tube à remplacer, on rapporte et on fixe la coquille creuse sur la surface interne du fond de la cuve autour de l'ouverture de traversée, par dépôt d'un métal de soudage suivant un bord périphérique de la coquille sur la surface interne du fond de la cuve, de manière que la surface concave de la coquille soit dirigée vers la surface interne du fond de la cuve, on alèse une paroi de la coquille creuse pour réaliser un trou de passage à travers la paroi de la coquille dans le prolongement de l'ouverture de traversée du fond de cuve et un chanfrein de soudage dans la partie convexe de la paroi de la coquille autour du trou de passage, on introduit un tube de traversée de remplacement dans l'ouverture de traversée du fond de cuve et dans le trou de passage de la coquille et on fixe le tube de traversée de remplacement sur la coquille par dépôt d'un métal de soudure dans le chanfrein de la coquille.

Afin de bien faire comprendre l'invention, on va maintenant décrire, à titre d'exemple non limitatif, en se référant aux figures jointes en annexe, un mode de réalisation d'un procédé de remplacement d'une pénétration de fond de cuve d'un réacteur nucléaire à eau sous pression.

La figure 1 est une vue en coupe par un plan vertical de la cuve d'un réacteur nucléaire à eau sous pression.

La figure 2 est une vue en coupe à plus grande échelle d'une pénétration du fond de la cuve représentée sur la figure 1 fixée sur le fond de cuve par un procédé selon l'art antérieur.

La figure 3 est une vue partielle en coupe d'une pénétration de fond de cuve de remplacement fixée sur le fond de la cuve d'un réacteur nucléaire à eau sous pression par le procédé selon l'invention.

La figure 4 est une vue en coupe analogue à la vue de la figure 3 et relative à une variante de réalisation du procédé selon l'invention.

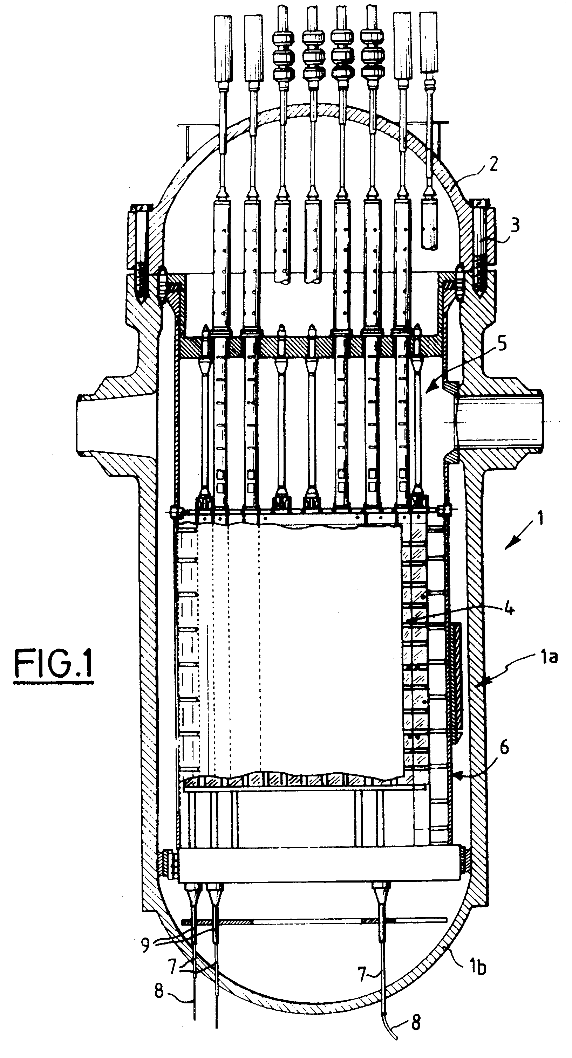

Sur la figure 1, on voit la cuve d'un réacteur nucléaire désignée de manière générale par le repère 1.

La cuve comporte une enveloppe externe 1a de forme sensiblement cylindrique fermée à son extrémité inférieure par un fond bombé 1b sensiblement hémisphérique.

L'extrémité supérieure de l'enveloppe 1a de la cuve 1 peut être fermée par un couvercle 2 sensiblement hémisphérique qui vient reposer sur une portée d'appui à la partie supérieure de l'enveloppe 1a de la cuve.

La cuve 1 renferme des équipements internes supérieurs 5 et des équipements internes inférieurs 6 qui peuvent être démontés et sortis de la cuve du réacteur nucléaire, pour effectuer certaines opérations de maintenance et de réparation de la cuve du réacteur nucléaire.

Le coeur 4 du réacteur nucléaire constitué par des assemblages combustibles juxtaposés repose sur une partie des équipements internes inférieurs 6 qui comportent des moyens de maintien latéral des assemblages combustibles du coeur 4.

Des équipements internes supérieurs 5 sont disposés au-dessus des assemblages combustibles du coeur 4.

Le fond bombé 1b de la cuve est traversé dans une direction parallèle à l'axe de la cuve par des pièces tubulaires 7 appelées pénétrations de fond de cuve qui sont fixées chacune à l'intérieur d'une ouverture de direction axiale traversant le fond 1b de la cuve.

Les pénétrations de fond de cuve 7 comportent une extrémité inférieure saillante en-dessous du fond de cuve 1b qui est reliée à un conduit de mesure 8 permettant de relier le fond de la cuve à un local d'instrumentation du réacteur nucléaire. Les pénétrations de fond de cuve comportent également une partie d'extrémité supérieure qui est saillante au-dessus de la surface supérieure concave du fond 1b de la cuve et qui est disposée de manière à venir s'engager dans un conduit de guidage vertical 9 des équipements internes inférieurs, au moment de la mise en place des équipements internes à l'intérieur de la cuve.

La pénétration de fond de cuve 7 et les conduits 8 et 9 permettent de faire passer un doigt de gant dans lequel est disposée une sonde mobile de mesure à l'intérieur de la cuve 1, de manière que le doigt de gant puisse pénétrer à l'intérieur d'un tube de guidage d'instrumentation d'un assemblage combustible du coeur 4.

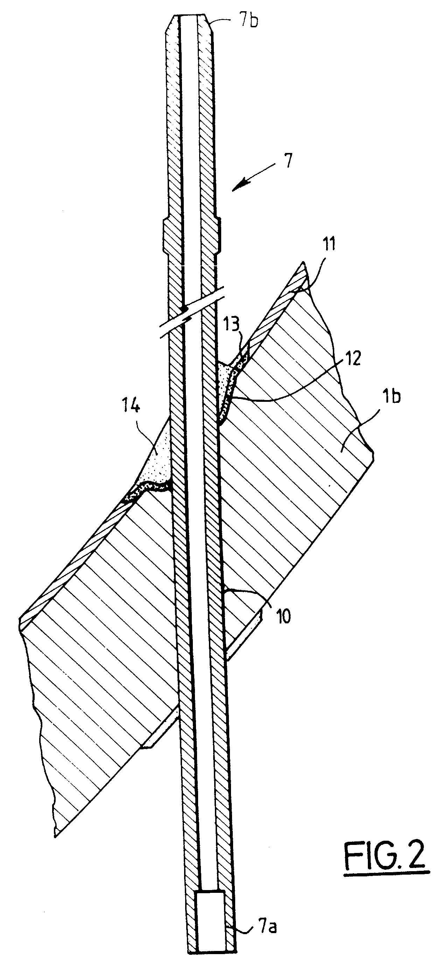

Comme il est visible sur la figure 2, le fond 1b de la cuve est percé d'ouvertures de traversée 10 dans la direction de l'axe de la cuve, permettant le passage et la fixation d'une pénétration de fond de cuve 7 constituée par une pièce tubulaire.

Le fond de la cuve 1b est réalisé en un acier à haute résistance faiblement allié. La surface intérieure du fond 1b qui est destinée à venir en contact avec l'eau sous pression remplissant la cuve du réacteur nucléaire pendant le fonctionnement du réacteur est revêtue par une couche en acier inoxydable 11 d'une épaisseur de l'ordre de 7, ou 7,5 mm.

Au niveau de chacune des ouvertures de traversée du fond de cuve, telle que l'ouverture 10, la surface intérieure du fond de cuve est usinée pour constituer un chanfrein 12 traversant le revêtement en acier inoxydable 11 et pénétrant à l'intérieur du métal du fond bombé 1b en acier faiblement allié, pour permettre le soudage de la pénétration de fond de cuve 7 engagée dans l'ouverture 10 sur le fond de cuve 1b.

Le fond du chanfrein 12 est revêtu par une couche de revêtement 13, appelée couche de beurrage, en alliage de nickel d'une nuance identique ou voisine de la nuance de l'alliage de nickel dans laquelle est réalisée la pénétration de fond de cuve tubulaire 7.

Le soudage de la pénétration de fond de cuve 7 sur le fond de cuve 1b est assuré par dépôt d'un métal de soudure constitué par un alliage de nickel ayant une composition analogue ou proche de la composition de l'alliage de nickel de la pénétration de fond de cuve 7, à l'intérieur du chanfrein 12 revêtu par la couche de beurrage 13.

Le métal de soudure 14 est déposé par couches successives dans le chanfrein 12.

La pénétration de fond de cuve 7 comporte une partie d'extrémité inférieure saillante en-dessous du fond bombé 1b dont l'extrémité 7a permet le raccordement d'un conduit de mesure.

La pénétration de fond de cuve 7 comporte une partie d'extrémité supérieure terminée par un chanfrein 7b disposé au-dessus du fond de cuve 1b et destinée à venir s'engager à l'intérieur d'un conduit de guidage des équipements internes inférieurs du réacteur nucléaire mis en place à l'intérieur de la cuve 1.

Lorsqu'un défaut tel qu'une fissure est décelé dans la paroi d'une pénétration de fond de cuve tel que représentée sur la figure 2, pendant une opération de contrôle de la cuve d'un réacteur nucléaire, après déchargement du coeur et démontage des équipements internes, il peut être nécessaire de réaliser le remplacement de cette pénétration de fond de cuve si le défaut décelé présente une certaine gravité.

Il en est ainsi par exemple dans le cas d'une fissure traversant la paroi de la pénétration, par exemple dans la zone de la soudure 14 sur le fond 1b de la cuve.

Dans ce cas, on réalise un démontage des éléments de protection du fond de cuve au voisinage de la pénétration et on sépare la pénétration 7 du conduit de mesure correspondant, de manière à pouvoir accéder à l'alésage intérieur de la pénétration dans lequel on peut introduire un outil d'usinage de petit diamètre. On peut également accèder à l'alésage de la pénétration par l'intérieur de la cuve.

On usine par l'intérieur la paroi de la pénétration 7 et le métal de la soudure 14, de manière à pouvoir réaliser l'extraction de la pénétration de fond de cuve défectueuse par le dessus du fond bombé par l'intérieur de la cuve et par le dessous de la cuve.

On réalise ensuite une inspection de la surface intérieure du fond de cuve autour de l'ouverture 10 dans laquelle était fixée la pénétration 7, pour déterminer la position, sur le fond de cuve, de la ligne de séparation entre le métal de la soudure 14 constitué par un alliage de nickel et la couche de revêtement 11 du fond de cuve en acier inoxydable.

On repère la position de la ligne de séparation par rapport à la zone prévue pour la soudure de la coquille de fixation de la pénétration de remplacement. S'il y a interférence entre la ligne de séparation et la zone de soudure, on utilisera un alliage de nickel insensible à la corrosion sous contrainte en milieu primaire pour réaliser la soudure. En revanche, s'il n'y a pas interférence, on utilisera un acier inoxydable comme métal de soudure. L'inspection de la surface du fond de la cuve au voisinage de la pénétration à remplacer permet donc de définir le métal de soudure.

En fonction des résultats de la détermination de la ligne de séparation entre l'alliage de nickel et l'acier inoxydable, on réalise un usinage de la surface intérieure du fond 1b de la cuve, autour de l'ouverture 10 de traversée du fond bombé.

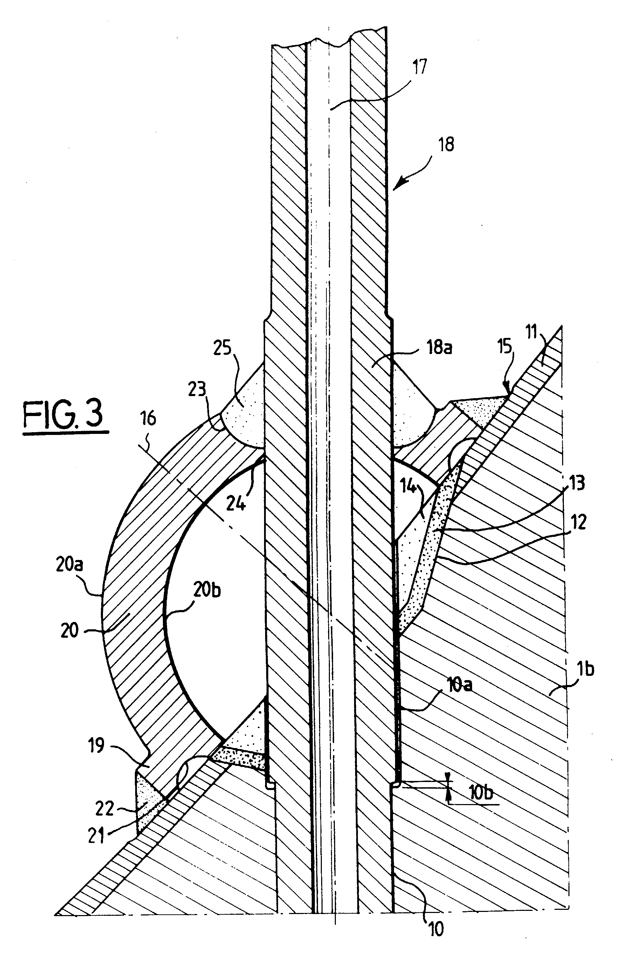

On a représenté sur la figure 3, la zone 15 de forme sensiblement circulaire du fond 1b dans laquelle on a réalisé un réusinage.

L'usinage de la zone 15 est réalisé par un outil positionné par rapport au système d'axes de la cuve et présentant un axe d'usinage confondu avec l'axe 16 normal au fond bombé de la cuve concourant avec l'axe 17 de l'ouverture 10 de traversée du fond de cuve en un point situé sensiblement sur la surface intérieure du fond bombé lb, au centre de l'ouverture 10.

L'usinage avec un outil de coupe monté rotatif autour de l'axe 16 permet d'usiner une zone ayant un contour circulaire entourant l'ouverture 10, de manière à réaliser l'enlèvement d'une fine couche de matériau de recouvrement du fond de la cuve.

La soudure 14 et la couche de beurrage 13 en alliage de nickel occupent sur la surface interne du fond de la cuve, une zone allongée de forme sensiblement elliptique. La zone 15 dans laquelle on réalise l'usinage de la surface interne du fond 1b présente une forme circulaire et un rayon supérieur au petit axe de la zone elliptique.

L'usinage de la surface interne du fond de cuve doit être effectué de manière parfaitement contrôlée, de façon qu'il subsiste une couche d'acier inoxydable 11 sur le fond de cuve au niveau de la zone 15 d'une épaisseur suffisante pour réaliser la fixation d'une pénétration de fond de cuve de remplacement, par l'intermédiaire d'une coquille creuse montée sur le fond de la cuve, sans affecter thermiquement le métal du fond situé sous le revêtement. Dans le cas d'une couche résiduelle de revêtement trop peu épaisse, l'échauffement du métal du fond lors du soudage entraîne une fragilisation du fond.

Il est donc nécessaire de maintenir une épaisseur de la couche de revêtement inoxydable 11 dans la zone 15 au moins égale à 5 mm.

Du fait que l'épaisseur nominale de la couche d'acier inoxydable 11 est sensiblement égale à 7 mm, la profondeur d'usinage de la surface interne du fond de cuve dans la zone 15 doit rester inférieure à 2 mm.

Il est donc nécessaire de contrôler parfaitement les conditions de réusinage de la surface intérieure du fond de la cuve, ce qui présente des difficultés, en particulier du fait de la courbure du fond de cuve.

Pour maintenir en tout point une épaisseur de métal suffisante, malgré la courbure du fond de cuve, il est possible d'usiner le revêtement suivant plusieurs plans inclinés l'un par rapport à l'autre, au lieu d'un seul plan.

Si l'épaisseur résiduelle est trop faible pour réaliser un usinage, on peut rapporter par soudage, à l'aide d'une machine automatique ou par dépôt manuel, autour de l'axe 16, une surépaisseur suffisante pour être ensuite usinée.

La coquille creuse 20 par l'intermédiaire de laquelle on réalise la fixation de la pénétration de fond de cuve de remplacement 18 présente une paroi délimitée par une surface externe 20a et une surface interne 20b ayant la forme de calottes sphériques.

En fait dans le mode de réalisation représenté sur la figure 3, les surfaces 20a et 20b sont hémisphériques et concentriques.

Comme représenté sur la figure 3, lorsque la coquille creuse 20 est fixée par soudure sur le fond de la cuve 1b, le centre commun aux deux demi-sphères 20a et 20b délimitant la paroi de la coquille 20 se trouve sensiblement confondu avec le point d'intersection des axes 16 et 17.

Les coquilles 20 utilisées pour la fixation des pénétrations de fond de cuve 18 de remplacement sont toutes identiques, quelle que soit la position de la pénétration de fond de cuve à remplacer sur le fond de la cuve. Cet avantage est dû à la forme en calotte sphérique de la coquille qui permet de disposer la calotte sphérique avec son axe suivant le rayon du fond bombé dans n'importe quelle zone du fond 1b.

La forme sphérique permet de plus de souder la coquille sur le fond de la cuve et la pénétration sur la coquille en déposant les cordons de soudure suivant des trajectoires planes et circulaires. Le soudage de la coquille sur le fond de cuve et de la pénétration sur la coquille peut être réalisé avec un outillage unique. En outre, la forme sphérique permet d'augmenter le moment d'inertie lors de sollicitations vibratoires d'origine hydraulique dans la cuve et d'absorber facilement les déformations thermiques du fond de la cuve

La coquille creuse 20 comporte un talon d'appui et de soudage 19 constituant le bord périphérique ouvert de la coquille 20 qui est usiné sur sa surface d'appui sous la forme d'une gorge 21 en forme de portion de tore.

On améliore ainsi la souplesse de la coquille sous la pression hydraulique à l'intérieur de la cuve.

Le rayon de la zone 15 usinée sur le fond de cuve autour de l'ouverture 10 est défini de manière qu'on puisse fixer à l'intérieur de la zone 15, dans une position centrée, la coquille 20 en appui sur le fond de cuve par l'intermédiaire de son talon 19 qui est fixé à l'intérieur de la zone 15 par un cordon de soudure 22. Le talon 19 chevauche la limite entre l'alliage de nickel constituant le métal de soudure 14 et le beurrage 13 et le revêtement 11 inoxydable du fond de la cuve en quatre zones, appelées zones de transition.

Après usinage de la zone 15, on réalise un contrôle par ressuage de cette zone usinée 15, de manière à vérifier qu'elle ne présente pas de défaut.

Si la zone 15 ne présente pas de défaut, on réalise la fixation par soudage de la coquille creuse 20.

Dans le cas où la zone 15 présente un défaut, celui-ci doit être réparé par affouillement et rechargement avant de réaliser la fixation par soudage de la coquille creuse 20.

La coquille creuse 20 est mise en place dans une disposition parfaitement centrée à l'intérieur de la zone 15.

L'axe 16 dirigé suivant un rayon du fond de cuve est confondu avec l'axe de symétrie des calottes sphériques 20a et 20b délimitant la paroi de la coquille 20.

Le talon d'appui 19 en contact avec la surface intérieure du fond 1b de la cuve est maintenu en place par des points de soudure.

On réalise alors le montage et le réglage d'un outil de soudage comportant un support rotatif autour de l'axe 16 permettant de réaliser le cordon de soudure 22 symétrique de révolution autour de l'axe 16, par passes successives.

Il est nécessaire d'utiliser un métal d'apport constitué par un alliage de nickel pour réaliser le cordon de soudure 22 puisque le talon 19 de la coquille 20 est soudé alternativement sur une zone en alliage de nickel et sur une zone en acier inoxydable séparées par les zones de transition. Un métal d'apport constitué par un alliage de nickel permet en effet de souder aussi bien deux pièces en alliage de nickel entre elles qu'une pièce en alliage de nickel avec une pièce en acier inoxydable.

Après avoir effectué le soudage de la coquille 20, on réalise l'alésage de la paroi de la coquille 20 et le réalésage de l'ouverture de traversée 10 du fond de cuve 1b, dans une zone 10a s'étendant sur une certaine longueur, suivant la direction de l'axe 17, pour permettre la mise en place d'une pénétration de fond de cuve de remplacement 18.

La pénétration de fond de cuve de remplacement 18 présente des parties d'extrémité sensiblement identiques aux parties d'extrémité de la pénétration de fond de cuve 7 dont on effectue le remplacement et une partie centrale 18a élargie diamétralement par rapport à la partie courante de la pénétration 18.

Par exemple, dans le cas d'une ouverture de traversée ayant un diamètre nominal légèrement supérieur à 38 mm, le diamètre de la partie courante de la pénétration de fond de cuve de remplacement 18 est de 38 mm et le diamètre de la partie élargie centrale 18a de 43 mm.

On effectue un alésage ou un réalésage de la paroi de la coquille creuse 20 et de l'ouverture 10 suivant la direction de l'axe 17.

La coquille creuse 20 peut comporter un avant-trou et, dans ce cas, il est possible d'effectuer en utilisant un outil d'alésage réglé suivant l'axe 17, un réalésage de la paroi de la coquille creuse 20 à un diamètre légèrement supérieur à 43 mm ainsi qu'un réalésage au même diamètre de l'ouverture 10, à travers la zone de soudure 14 et une partie du fond de cuve 1b, dans le prolongement exact de l'alésage traversant la paroi de la coquille creuse 20.

L'alésage de la paroi de la coquille 20 peut être effectué en mettant en place dans l'ouverture 10 un centreur expansible dans lequel peut être engagé dans une position parfaitement coaxiale par rapport à l'ouverture 10, un axe de centrage dont une extrémité vient se loger dans l'avant-trou traversant la paroi de la coquille 20. On peut alors engager sur l'extrémité de l'axe de centrage saillante par rapport à la surface de la coquille, par l'intérieur de la cuve, un outillage d'alésage qui est monté rotatif sur l'axe de centrage.

La partie réalésée 10a de l'ouverture 10 de traversée du fond de cuve 1b est destinée à recevoir l'extrémité inférieure de la partie centrale 18a de la pénétration de fond de cuve de remplacement 18.

On usine de plus dans la paroi de la coquille creuse 20 un chanfrein 23 autour de l'ouverture de la paroi qui a été réalésée.

Il subsiste en fin d'usinage du chanfrein 23, un alésage 24 de réception de la partie 18a de la pénétration de fond de cuve de remplacement 18 à l'intérieur de la paroi de la coquille creuse 20, sur une longueur de quelques millimètres.

On réalise un contrôle par ressuage des ouvertures 10a et 24 et du chanfrein 23, de manière à détecter et éventuellement à réparer tout défaut telle qu'une fissure présente sur les surfaces réusinées.

L'outil d'alésage et l'axe de centrage peuvent être séparés du centreur expansible et extraits par l'intérieur de la cuve.

On réalise la mise en place de la pénétration de fond de cuve de remplacement 18 à l'intérieur des alésages 24 et 10a, de manière à maintenir un jeu 10b de quelques millimètres entre l'extrémité inférieure de la partie centrale 18a de la pénétration de fond de cuve de remplacement et l'épaulement séparant le fond de l'ouverture réalésée 10a de la partie courante de l'ouverture 10.

On réalise alors la fixation de la pénétration de fond de cuve de remplacement 18 par dépôt d'un métal de soudure 25 dans le chanfrein 23 de la paroi de la coquille creuse 20, autour de la pénétration 18.

Pour réaliser le dépôt du métal de soudure 25 de fixation de la pénétration de fond de cuve 18 dans le chanfrein 23, on peut utiliser le dispositif de soudage utilisé précédemment pour la réalisation du cordon de soudure 22 de la coquille creuse 20 sur le fond de cuve 1b.

L'outil de soudage est alors monté rotatif autour d'un axe confondu avec l'axe 17 de la pénétration et réglé de manière à réaliser le dépôt de la soudure 25 dans le chanfrein 23, autour de la pénétration 18.

On effectue un contrôle des soudures de la coquille et de la pénétration.

On peut alors effectuer la remise en place de la protection locale du fond de cuve autour de la pénétration de remplacement 18 et la fixation du conduit de mesure à l'extrémité de la pénétration 18 saillant en-dessous du fond de cuve.

La fixation étanche de la pénétration de fond de cuve de remplacement 18 sur le fond de cuve est assurée par la soudure 25. La partie 18a de la pénétration 18 comporte un méplat dans sa partie engagée à l'intérieur de la partie 10a de l'ouverture de traversée et la partie courante inférieure de la pénétration 18 comporte de même un méplat dans sa partie engagée à l'intérieur de l'ouverture de traversée 10.

On peut faire passer à l'intérieur du jeu constitué entre le méplat et l'alésage du fond de cuve, le long de la pénétration de fond de cuve 18 et de l'ouverture 10, 10a, des fils de mesure reliés à au moins un détecteur disposé dans le volume intérieur de la coquille creuse 20. On peut ainsi effectuer une détection d'humidité dans le volume intérieur de la coquille 20, ce qui permet de contrôler en permanence l'étanchéité des soudures de fixation 22 de la coquille 20 sur le fond de cuve et 25 de fixation de la pénétration de remplacement 18 sur la coquille 20, pendant le fonctionnement du réacteur.

Cette étanchéité peut être aussi contrôlée par analyse de l'air prélevé dans le volume intérieur de la coquille et analysé sur un détecteur de radionucléïdes ou d'humidité. Dans ce cas, la pénétration sera équipée d'une tuyauterie qui permettra le prélèvement de l'air.

Il est à remarquer que quelle que soit la position de la pénétration de fond de cuve à remplacer sur le fond de la cuve, la pénétration de fond de cuve de remplacement peut être fixée en utilisant une coquille creuse de forme et de dimensions standard.

En effet, la coquille creuse 20 dont la paroi est délimitée par des surfaces en forme de calottes sphériques peut toujours être placée de manière que son axe soit dirigé suivant le rayon du fond de cuve passant par le centre de l'ouverture de traversée, après usinage du revêtement du fond de cuve.

Pour effectuer les réparations d'un nombre quelconque de pénétrations de fond de cuve, il est donc possible de fabriquer et d'approvisionner un nombre quelconque de coquilles de fixation. On peut donc obtenir une réduction du coût de ces pièces qui peuvent être réalisées en série.

Le perçage et l'alésage des coquilles de fixation peuvent être réalisés après soudage de la coquille creuse sur le fond de cuve, dans de très bonnes conditions de précision en alignant l'axe de perçage et/ou d'alésage sur l'axe de l'ouverture de traversée du fond de cuve.

De plus, les opérations de soudage de la coquille creuse sur le fond de cuve et de la pénétration de remplacement sur la coquille peuvent être réalisées avec le même dispositif de soudage fixé sur le fond de cuve.

Du fait de la présence dans la partie centrale de la pénétration de remplacement 18 d'une partie élargie diamétralement 18a et d'un épaulement entre la partie réalésée 10a et la partie non réalésée de l'ouverture 10, la pénétration de fond de cuve est parfaitement maintenue et ne peut être éjectée, dans le cas d'une rupture de la soudure 25 sur la coquille creuse 20.

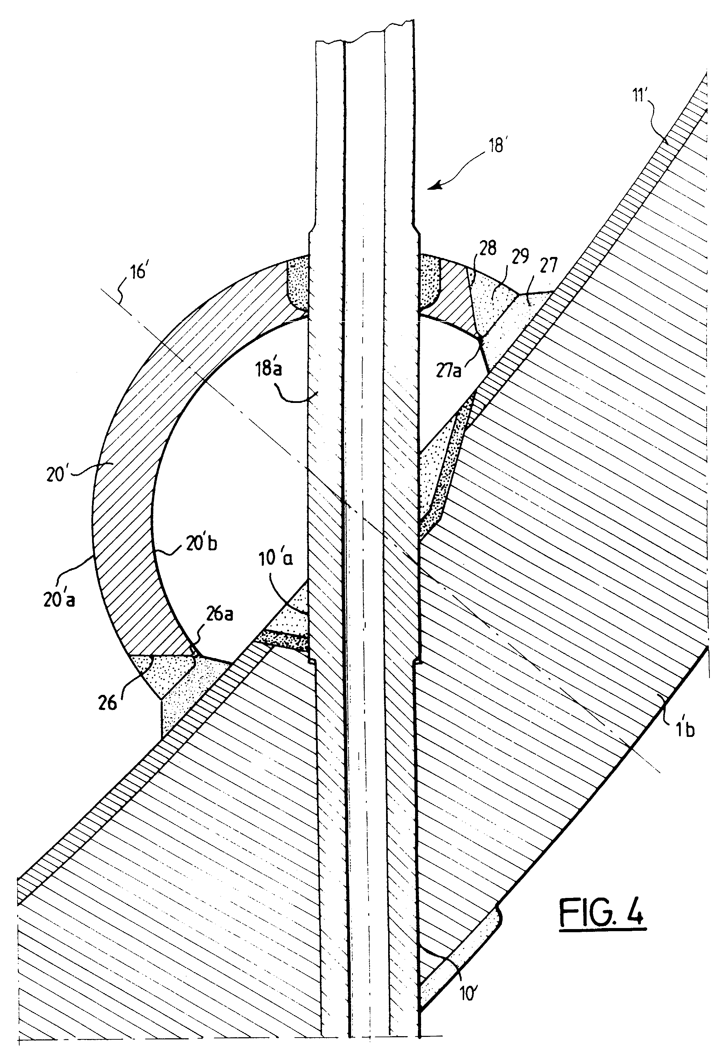

Sur la figure 4, on a représenté une variante de réalisation du mode de fixation d'une pénétration sur le fond de la cuve d'un réacteur nucléaire. Les éléments analogues sur les figures 3 et 4 portent les mêmes repères, affectés toutefois du signe ' (prime), dans le cas des éléments représentés sur la figure 4.

La pénétration de fond de cuve de remplacement 18' est fixée sur le fond de cuve 1'b, à l'intérieur de l'ouverture de traversée 10', par l'intermédiaire d'une coquille 20' délimitée par une surface externe convexe 20'a et une surface interne concave 20'b ayant sensiblement la forme de demi-sphères.

Dans une première phase du procédé de remplacement, on a réalisé l'usinage et l'extraction d'une pénétration de fond de cuve à remplacer, par des opérations totalement identiques aux opérations correspondantes décrites plus haut en regard des figures 2 et 3.

La variante de réalisation du procédé de remplacement, comme représenté sur la figure 4, diffère du mode de réalisation décrit plus haut par le fait que la coquille creuse 20' ne comporte pas de rebord d'assemblage analogue au rebord 19 de la coquille 20.

La partie d'extrémité ouverte de la coquille 20' est usinée pour constituer un rebord chanfreiné 26 et un talon d'appui 26a sur toute la périphérie du bord d'appui de la coquille.

Pour réaliser la fixation de la coquille 20' sur le fond de cuve 1'b, on dépose dans un premier temps une couche épaisse d'alliage de nickel de forme annulaire sur la couche de revêtement 11' du fond de cuve 1'b, autour de l'ouverture de traversée 10'.

On usine la couche épaisse déposée pour constituer un anneau d'appui et de fixation 27 comportant un talon d'appui interne 27a ayant même diamètre et même largeur que le talon d'appui 26a de la coquille 20' et pour axe, le rayon 16' du fond hémisphérique 1'b passant par le centre de l'ouverture 10'.

La coquille 20' est mise en place sur l'anneau d'appui 27, de manière que les talons 26a et 27a soient dans des positions superposées et que l'axe de la coquille 20' soit confondu avec l'axe 16'.

Un chanfrein de soudage 28 est défini par le rebord 26 et la surface supérieure de l'anneau 27.

On dépose un métal de soudure 29 dans le chanfrein 28, de manière à fixer la coquille creuse 20' sur le fond de cuve 1'b.

Les opérations suivantes d'alésage de la paroi de la coquille 20', de réalésage de l'ouverture 10 et de mise en place et de soudage de la pénétration de remplacement 18' comprenant une partie élargie diamétralement 18'a sont réalisées de manière identique aux opérations correspondantes décrites plus haut relatives à la pénétration de remplacement 18.

Ce mode de réalisation permet d'éviter un usinage de la couche de revêtement 11' du fond de cuve ; de plus, le contrôle final de la qualité de réalisation du plan de raccordement et de la soudure de la coquille sur l'anneau rapporté sur le fond de cuve peut être effectué dans de bonnes conditions.

Dans le cas d'une pénétration de fond de cuve de remplacement en alliage de nickel, on utilise une coquille en alliage de nickel de la même nuance que la pénétration et on soude la coquille sur le fond de cuve et la pénétration sur la coquille avec un métal de soudure constitué par un alliage de nickel.

L'invention ne se limite pas au mode de réalisation qui a été décrit.

C'est ainsi que la coquille creuse 20 peut avoir une forme différente de la forme hémisphérique qui a été décrite.

Il est possible également de mettre en oeuvre le procédé de l'invention en utilisant une pénétration de fond de cuve de remplacement en acier inoxydable.

Dans ce cas, on peut utiliser une coquille en alliage de nickel ou en acier inoxydable. Dans le cas d'une coquille en alliage de nickel, le métal de soudure de la coquille sur le fond de cuve et de la pénétration sur la coquille est un alliage de nickel.

Dans le cas d'une coquille en acier inoxydable le métal de soudure présente la composition d'un acier inoxydable. Toutefois, il peut être nécessaire, dans ce cas également, d'utiliser un alliage de nickel comme métal de soudure de la coquille sur le fond de cuve, lorsqu'on remplace une pénétration de fond de cuve en alliage de nickel, du fait de la présence d'alliage de nickel déposé sur le fond de cuve autour de l'ouverture de traversée, comme indiqué plus haut.

Dans le cas d'une pénétration de fond de cuve de remplacement (telle que 18 ou 18'), en acier inoxydable, on supprime avantageusement la liaison bimétallique entre la pénétration de fond de cuve et le conduit de mesure qui est en acier inoxydable. On réalise ainsi une soudure en acier inoxydable insensible à la corrosion et on évite les inconvénients de la soudure bimétallique du conduit de mesure sur la pénétration de fond de cuve à remplacer.

Le talon de fixation de la coquille creuse sur le fond de cuve peut lui-même présenter une forme différente de la forme décrite et représentée.

Le procédé de remplacement suivant l'invention peut être utilisé pour la fixation de pièces tubulaires de traversée d'une paroi différentes de pénétrations de fond de cuve d'un réacteur nucléaire à eau sous pression.

## Revendications

1. Procédé de remplacement d'un tube (7) fixé dans une ouverture (10; 10') de traversée du fond (1b; 1'b) de la cuve (1) d'un réacteur nucléaire refroidi par de l'eau sous pression consistant à supprimer la liaison entre le tube (7) à remplacer et le fond de la cuve (1b), à extraire le tube à remplacer (7) de l'ouverture de traversée (10) du fond (1b) de la cuve, à fixer une coquille (20; 20') présentant une surface externe convexe (20a; 20'a) et une surface interne concave (20b; 20'b), ayant sensiblement la forme de calottes sphériques sur le fond (1b; 1'b) de la cuve (1), et à fixer sur la coquille creuse (20; 20') un tube de remplacement (18; 18') traversant l'ouverture (10), caractérisé par le fait qu'après l'extraction du tube (7) à remplacer, on rapporte et on fixe la coquille creuse (20; 20') sur la surface interne du fond (1b; 1'b) de la cuve, autour de l'ouverture de traversée (10; 10'), par dépôt d'un métal de soudage suivant un bord périphérique (19) de la coquille (20) sur la surface interne du fond (1b; 1'b), de manière que la surface concave de la coquille (20; 20') soit dirigée vers la surface interne du fond (1b; 1'b), qu'on alèse une paroi de la coquille creuse (20; 20') pour réaliser un trou de passage (24) à travers la paroi de la coquille (20; 20') dans le prolongement de l'ouverture de traversée (10; 10') du fond de cuve et un chanfrein de soudage (23) dans la surface convexe de la paroi de la coquille (20; 20'), autour du trou de passage (24), qu'on introduit un tube de traversée (18; 18') de remplacement dans l'ouverture de traversée (10; 10') du fond de cuve et dans le trou de passage (24) de la coquille (20; 20') et qu'on fixe le tube de traversée (18; 18') de remplacement sur la coquille (20; 20') par dépôt d'un métal de soudure (25) dans le chanfrein (23) de la coquille (20; 20').

2. Procédé suivant la revendication 1, caractérisé par le fait qu'après l'extraction du tube à remplacer, on réalise un usinage avec enlèvement de copeaux de la surface intérieure du fond (1b; 1'b) de la cuve (1) suivant une zone (15) autour de l'ouverture de traversée (10; 10') et qu'on rapporte et on fixe la coquille creuse (20; 20') dans la zone (15) usinée du fond (1b; 1'b) de la cuve.

3. Procédé suivant la revendication 2, caractérisé par le fait que l'usinage de la surface intérieure du fond (1b) est réalisé dans une couche (11) de revêtement du fond de cuve (1b).

4. Procédé suivant la revendication 1, caractérisé par le fait qu'on dépose sur le fond de la cuve (1b) autour de l'ouverture de traversée (10), une couche annulaire épaisse de métal, qu'on usine la couche épaisse déposée pour former un anneau d'appui (27) de la coquille creuse (20') et qu'on fixe la coquille creuse (20'), par un bord périphérique (26) sur une surface usinée de l'anneau (27), par dépôt d'un métal de soudure (29) dans un chanfrein (28) délimité par le bord périphérique (26) et la surface usinée de l'anneau (27).

5. Procédé suivant la revendication 4, caractérisé par le fait que le bord périphérique (26) de la coquille creuse (20') et la surface usinée de l'anneau d'appui (27) comportent des talons d'appui respectifs (26a, 26b) et qu'on place en contact l'un de l'autre les talons d'appui (26a, 27b) avant de réaliser la fixation par soudure de la coquille creuse (20') sur l'anneau d'appui (27).

6. Procédé suivant l'une quelconque des revendications 1 à 5, caractérisé par le fait que le tube de traversée (18; 18') de remplacement comporte une partie centrale (18a) élargie diamétralement et qu'on réalèse sur une partie (10a; 10'a) de sa longueur l'ouverture (10; 10') de traversée du fond (1b; 1'b), à un diamètre au moins égal au diamètre de la partie élargie diamétralement (18a) du tube de traversée (18; 18') de remplacement et qu'on engage, lors de la mise en place du tube de traversée (18; 18') de remplacement, une portion de la partie (18a; 18'a) élargie diamétralement du tube de traversée de remplacement (18; 18') dans la partie réalésée (10a; 10'a) de l'ouverture de traversée (10; 10') du fond (1b; 1'b).

7. Procédé suivant la revendication 6, caractérisé par le fait qu'on met en place le tube de traversée de remplacement (18; 18') dans l'ouverture de traversée (10; 10'), de manière qu'un épaulement d'extrémité séparant la partie à diamètre élargi (18a; 18'a) du tube de remplacement d'une partie courante du tube de remplacement se trouve à une certaine distance (10b) d'un épaulement séparant la partie réalésée (10a) de la partie non réalésée de l'ouverture de traversée (10; 10'),
et qu'on effectue le dépôt du métal de soudure (25) du tube de traversée (18; 18') de remplacement sur la coquille creuse (20; 20').

8. Procédé suivant l'une quelconque des revendications 1, 2 et 3, caractérisé par le fait que le bord périphérique (19) de la coquille creuse (20; 20') présente sur une surface annulaire de contact avec la surface intérieure du fond de cuve (1b; 1'b) une gorge (21) en forme de portion de tore.

9. Procédé suivant l'une quelconque des revendications 1 à 8, de remplacement d'un tube de traversée (7) disposé dans une zone quelconque d'un fond bombé (1) caractérisé par le fait qu'on rapporte et qu'on fixe sur le fond de la cuve (1b; 1'b), une coquille creuse de forme et de dimensions standard, quelle que soit la position de l'ouverture de traversée (10; 10') sur le fond bombé (1b; 1'b).

10. Procédé suivant l'une quelconque des revendications 1 à 9, caractérisé par le fait qu'on utilise un même dispositif de soudage pour réaliser le soudage de la coquille creuse (20; 20') sur le fond (1b; 1'b) et le dépôt du métal de soudure (25) du tube de traversée de remplacement (18; 18') sur la coquille creuse (20; 20').

11. Procédé suivant l'une quelconque des revendications 1 à 10, caractérisé par le fait que l'adaptateur de remplacement (18; 18') présente un méplat dans sa partie située dans l'ouverture de traversée (10; 10'), de manière qu'un espace de communication soit ménagé entre le volume intérieur de la coquille creuse (20; 20') et une zone extérieure du fond bombé.

12. Procédé suivant la revendication 11, caractérisé par le fait que pendant le fonctionnement du réacteur nucléaire, après son redémarrage, on détecte des présences éventuelles d'eau à l'intérieur d'une chambre délimitée par la coquille creuse (20; 20') et la surface intérieure du fond de cuve (1b; 1'b).

13. Procédé suivant la revendication 1, dans le cas d'un fond de cuve (1b; 1'b) revêtu d'une couche d'acier inoxydable (11) et d'une pénétration de fond de cuve (7) à remplacer en alliage de nickel fixée sur le fond de cuve par l'intermédiaire d'un métal de soudure (13, 14) en alliage de nickel, caractérisé par le fait que, préalablement à l'usinage de la surface du fond de cuve autour de l'ouverture (10; 10'), après extraction de la pénétration de fond de cuve (7) à remplacer, on effectue une détection de la limite entre l'alliage de nickel du métal de soudure (13, 14) et l'acier inoxydable de la couche de revêtement (11).

14. Procédé suivant l'une quelconque des revendications 1 à 13, caractérisé par le fait qu'on effectue un contrôle par ressuage de la surface (15) usinée par enlèvement de copeaux autour de l'ouverture (10; 10'), avant la fixation par soudage de la coquille creuse (20; 20') sur le fond de cuve (1b).

15. Procédé suivant l'une quelconque des revendications 1 à 13, caractérisé par le fait qu'on effectue un contrôle par ressuage de l'alésage (24) de la coquille creuse (20; 20') et d'une zone réalésée (10a; 10'a) de l'ouverture de traversée (10; 10'), préalablement à la fixation par soudage du tube de traversée de remplacement (18, 18').

16. Procédé suivant l'une quelconque des revendications 1 à 15, caractérisé par le fait que le tube de traversée à remplacer est une pénétration du fond (1b; 1'b) de la cuve d'un réacteur nucléaire à eau sous pression en alliage de nickel et que le tube de traversée (18; 18') de remplacement est en acier inoxydable.

## Patentansprüche

1. Verfahren zum Ersetzen eines Rohres (7), das in einer Durchgangsöffnung (10; 10') des Bodens (1b; 1'b) des Druckgefäßes (1) eines druckwassergekühlten Kernreaktors befestigt ist, das darin besteht, die Verbindung zwischen dem zu ersetzenden Rohr (7) und dem Boden des Druckgefäßes (1b) aufzuheben, das zu ersetzende Rohr (7) aus der Durchgangsöffnung (10) des Bodens (1b) des Druckgefäßes herauszuziehen, eine Schale (20; 20'), die eine konvexe Außenoberfläche (20a; 20'a) und eine konkave Innenoberfläche (20b; 20'b) aufweist, die im wesentlichen die Form von Kugelkalotten aufweisen, am Boden (1b; 1'b) des Druckgefäßes (1) zu befestigen und an der hohlen Schale (20; 20') ein Ersatzrohr (18; 18') zu befestigen, das die Öffnung (10) durchsetzt, dadurch gekennzeichnet, daß man nach dem Ausziehen des zu ersetzenden Rohres (7) die Hohlschale (20; 20') auf der Innenoberfläche des Bodens (1b; 1'b) des Druckgefäßes rund um die Durchgangsöffnung (10; 10') durch Auftragen eines Schweißmetalls längs eines Umfangsrandes (19) der Schale (20) auf der Innenoberfläche des Bodens (1b; 1'b) derart aufträgt und befestigt, daß die konkave Oberfläche der Schale (20; 20') der Innenoberfläche des Bodens (1b; 1'b) zugewandt ist, daß man eine Wand der Hohlschale (20; 20') aufbohrt, um ein Durchtrittsloch (24) durch die Wand der Schale (20; 20') in der Verlängerung der Durchgangsöffnung (10; 10') des Bodens des Druckgefäßes sowie eine Schweißabschrägung (23) in der konvexen Oberfläche der Wand der Schale (20; 20) rund um das Durchtrittsloch (24) zu bilden, daß man ein Ersatz-Durchführungsrohr (18; 18') in die Durchgangsöffnung (10; 10') des Bodens des Druckgefäßes und in das Durchtrittsloch (24) der Schale (20; 20') einführt, und daß man das Ersatz-Durchführungsrohr (18; 18') an der Schale (20; 20') durch Auftragen eines Schweißmetalls (25) in der Abschrägung (23) der Schale (20; 20') befestigt.

2. Verfahren nach Anspruch 1, dadurch gekennzeichnet, daß man nach dem Ausziehen des zu ersetzenden Rohres eine spanabhebende Bearbeitung der Innenoberfläche des Bodens (1b; 1'b) des Druckgefäßes (1) entsprechend einer Zone (15) rund um die Durchgangsöffnung (10; 10') durchführt, und daß man die Hohlschale (20; 20') in der bearbeiteten Zone (15) des Bodens (1b; 1'b) des Druckgefäßes aufträgt und befestigt.

3. Verfahren nach Anspruch 2, dadurch gekennzeichnet, daß die Bearbeitung der Innenoberfläche des Bodens (1b) in einer Verkleidungsschicht (11) des Bodens des Druckgefäßes (1b) durchgeführt wird.

4. Verfahren nach Anspruch 1, dadurch gekennzeichnet, daß man auf dem Boden des Druckgefäßes (1b) rund um die Durchgangsöffnung (10) eine dicke, ringförmige Metallschicht aufträgt, daß man die aufgetragene, dicke Schicht bearbeitet, um einen Auflagering (27) für die Hohlschale (20') zu bilden, und daß man die Hohlschale (20') mit einem Umfangsrand (26) auf einer bearbeiteten Oberfläche des Rings (27) durch Auftrag eines Schweißmetalls (29) in einer Abschrägung (28) befestigt, die durch den Umfangsrand (26) und die bearbeitete Oberfläche des Ringes (27) begrenzt ist.

5. Verfahren nach Anspruch 4, dadurch gekennzeichnet, daß der Umfangsrand (26) der Hohlschale (20') und die bearbeitete Oberfläche des Auflagerings (27) jeweils Auflageansätze (26a, 26b) aufweisen, und daß man die Auflageansätze (26a, 27b) miteinander in Berührung verbringt, bevor man die Befestigung der Hohlschale (20') auf dem Auflagering (27) durch Schweißen durchführt.

6. Verfahren nach irgendeinem der Ansprüche 1 bis 5, dadurch gekennzeichnet, daß das Ersatz-Durchführungsrohr (18; 18') einen diametral vergrößerten, mittleren Teil (18a) aufweist, und daß man die Durchgangsöffnung (10; 10') des Bodens (1b; 1'b) auf einem Teil (10a; 10'a) seiner Länge auf einen Durchmesser aufbohrt, der mindestens gleich ist dem diametral vergrößerten Teil (18a) des Ersatz-Durchführungsrohres (18; 18'), und daß man während des Einsetzens des Ersatz-Durchführungsrohres (18; 18') einen Abschnitt des diametral vergrößerten Teils (18a; 18'a) des Ersatz-Durchführungsrohres (18; 18') in den aufgebohrten Teil (10a; 10'a) der Durchgangsöffnung (10; 10') des Bodens (1b; 1'b) eingreifen läßt.

7. Verfahren nach Anspruch 6, dadurch gekennzeichnet, daß man das Ersatz-Durchführungsrohr (18; 18') in die Durchgangsöffnung (10; 10') derart einsetzt, daß eine Endschulter, die den Teil mit vergrößertem Durchmesser (18a; 18'a) des Ersatzrohres vom durchgehenden Abschnitt des Ersatzrohres trennt, sich in einem bestimmten Abstand (10b) zu einer Schulter befindet, die den aufgebohrten Teil (10a) vom nicht-aufgebohrten Teil der Durchgangsöffnung (10; 10') trennt, und daß man den Auftrag von Schweißmetall (25) des Ersatz-Durchführungsrohres (18; 18') auf der Hohlschale (20; 20') bewirkt.

8. Verfahren nach irgendeinem der Ansprüche 1, 2 und 3, dadurch gekennzeichnet, daß der Umfangsrand (19) der Hohlschale (20; 20') auf einer Ringfläche der Berührung mit der Innenoberfläche des Bodens des Druckgefäßes (1b; 1'b) eine Nut (21) in Form eines Torus-Abschnitts aufweist.

9. Verfahren nach irgendeinem der Ansprüche 1 bis 8, zum Ersetzen eines Durchführungsrohres (7), das in irgendeiner Zone eines gewölbten Bodens (1) angeordnet ist, dadurch gekennzeichnet, daß man auf dem Boden des Druckgefäßes (1b; 1'b) eine Hohlschale mit standardisierter Form und Abmessung aufträgt und befestigt, gleichgültig, wie die Lage der Durchgangsöffnung (10; 10') auf dem gewölbten Boden (1b; 1'b) auch sein mag.

10. Verfahren nach irgendeinem der Ansprüche 1 bis 9, dadurch gekennzeichnet, daß man ein und dieselbe Schweißvorrichtung benutzt, um die Hohlschale (20; 20') auf dem Boden (1b; 1'b) festzuschweißen, und um das Schweißmetall (25) des Ersatz-Durchführungsrohres (18; 18') auf der Hohlschale (20; 20') aufzutragen.

11. Verfahren nach irgendeinem der Ansprüche 1 bis 10, dadurch gekennzeichnet, daß der Ersatz-Adapter (18; 18') eine Abflachung in seinem Teil aufweist, der in der Durchgangsöffnung (10; 10') gelegen ist, und zwar derart, daß ein Verbindungsraum zwischen dem Innenvolumen der Hohlschale (20; 20') und einer Zone außerhalb des gewölbten Bodens hergestellt wird.

12. Verfahren nach Anspruch 11, dadurch gekennzeichnet, daß man während des Betriebs des Kernreaktors nach seiner Wiedereinschaltung die mögliche Anwesenheit von Wasser im Inneren einer Kammer feststellt, die durch die Hohlschale (20; 20') und die Innenoberfläche des Bodens des Druckgefäßes (1b; 1'b) abgegrenzt ist.

13. Verfahren nach Anspruch 1, im Fall eines Bodens eines Druckgefäßes (1b; 1'b), der mit einer Schicht aus rostfreiem Stahl (11) verkleidet ist, und im Fall eines zu ersetzenden, den Boden des Druckgefäßes durchdringenden Körpers (7) aus einer Nickellegierung, der am Boden des Druckgefäßes mittels eines Schweißmetalls (13, 14) aus einer Nickellegierung befestigt ist, dadurch gekennzeichnet, daß man vor der Bearbeitung der Oberfläche des Bodens des Druckgefäßes rund um die öffnung (10; 10') nach dem Ausziehen des zu ersetzenden, den Boden des Druckgefäßes durchdringenden Körpers (7) die Grenze zwischen der Nickellegierung des Schweißmetalls (13, 14) und dem rostfreien Stahl der Verkleidungsschicht (11) feststellt.

14. Verfahren nach irgendeinem der Ansprüche 1 bis 13, dadurch gekennzeichnet, daß man vor der Befestigung der Hohlschale (20; 20') auf dem Boden des Druckgefäßes (1b) eine Kontrolle der Oberfläche (15), die spanabhebend rund um die Öffnung (10; 10') eingebracht wurde, durch Ausschwitzen bzw. Einsickern bewirkt.

15. Verfahren nach irgendeinem der Ansprüche 1 bis 13, dadurch gekennzeichnet, daß man eine Kontrolle der Bohrung (24) der Hohlschale (20; 20') und einer ausgebohrten Zone (10a; 10'a) der Durchgangsöffnung (10; 10') durch Ausschwitzen bzw. Einsickern bewirkt, bevor man das Ersatz-Durchführungsrohr (18; 18') durch Schweißen befestigt.

16. Verfahren nach irgendeinem der Ansprüche 1 bis 15, dadurch gekennzeichnet, daß das zu ersetzende Durchführungsrohr eine Durchdringung des Bodens (1b; 1'b) des Druckgefässes eines Druckwasser-Kernreaktors aus Nickellegierung ist, und daß das Ersatz-Durchführungsrohr (18; 18') aus rostfreiem Stahl besteht.

## Claims

1. Process for replacing a tube (7) fixed in a through-opening (10; 10') in the base (1b; 1'b) of the tank (1) of a pressurised water-cooled nuclear reactor, consisting in breaking the connection between the tube (7) which is to be replaced and the base of the tank (1b), removing the tube (7) which is to be replaced from the through-opening (10) in the base (1b) of the tank, fixing a shell (20; 20') having a convex outer surface (20a; 20'a) and a concave inner surface (20b; 20'b), substantially in the form of spherical cups, onto the base (1b; 1'b) of the tank (1), and fixing a replacement tube (18; 18'), which passes through the opening (10), onto the hollow shell (20; 20'), characterised in that, after the removal of the tube (7) which is to be replaced, the hollow shell (20; 20') is positioned and fixed on the inner surface of the base (1b; 1'b) of the tank, around the through-opening (10; 10'), by the deposition of a welding metal along a peripheral edge (19) of the shell (20) over the inner surface of the base (1b; 1'b), so that the concave surface of the shell (20; 20') is directed towards the inner surface of the base (1b; 1'b), a wall of the hollow shell (20; 20') is bored to provide a transit hole (24) through the wall of the shell (20; 20') on an extension of the through-opening (10; 10') in the base of the tank and a welding chamfer (23) in the convex surface of the wall of the shell (20; 20'), around the transit hole (24), a replacement through-tube (18; 18') is inserted in the through-opening (10; 10') in the base of the tank and in the transit hole (24) in the shell (20; 20') and the replacement through-tube (18; 18') is fixed to the shell (20; 20') by deposition of a welding metal (25) in the chamfer (23) in the shell (20; 20').

2. Process according to claim 1, characterised in that, after the removal of the tube which is to be replaced, machining is carried out, cutting material from the inner surface of the base (1b, 1'b) of the tank (1) in a zone (15) around the through-opening (10; 10') and the hollow shell (20; 20') is positioned and fixed in the machined zone (15) in the base (1b; 1'b) of the tank.

3. Process according to claim 2, characterised in that the machining of the inner surface of the base (1b) is carried out in a coating layer (11) on the base (1b) of the tank.

4. Process according to claim 1, characterised in that a thick annular layer of metal is deposited on the base of the tank (1b) around the through-opening (10), the thick deposited layer is machined to form a support ring (27) for the hollow shell (20') and the hollow shell (20') is fixed, by a peripheral edge (26), on to a machined surface of the ring (27), by deposition of a welding metal (29) in a chamfer (28) delimited by the peripheral edge (26) and the machined surface of the ring (27).

5. Process according to claim 4, characterised in that the peripheral edge (26) of the hollow shell (20') and the machined surface of the support ring (27) comprise respective support beads (26a, 26b) and the support beads (26a, 26b) are placed in contact with each other before the hollow shell (20') is fixed to the support ring (27) by welding.

6. Process according to any one of claims 1 to 5, characterised in that the replacement through-tube (18; 18') has a diametrically widened central part' (18a) and the through-opening (10; 10') in the base (1b; 1'b) is rebored over part (10a; 10'a) of its length to a diameter at least equal to the diameter of the diametrically widened part (18a) of the replacement through-tube (18; 18'), and when the replacement through-tube (18; 18') is put into position, a portion of the diametrically widened part (18a; 18'a) of the replacement through-tube (18; 18') engages in the rebored section (10a; 10'a) of the through-opening (10; 10') in the base (1b; 1'b).

7. Process according to claim 6, characterised in that the replacement through-tube (18; 18') is placed in the through-opening (10; 10') in such a way that an end shoulder separating the wider-diameter part (18a; 18'a) of the replacement tube from a continuous part of the replacement tube is located at a certain spacing (10b) from a shoulder separating the rebored part (10a) from the non-rebored part of the through-opening (10; 10'), and the welding metal (25) of the replacement through-tube (18; 18') is deposited on the hollow shell (20; 20').

8. Process according to any one of claims 1, 2 and 3, characterised in that the peripheral edge (19) of the hollow shell (20; 20') has a groove (21), in the form of a portion of a torus, on an annular surface making contact with the inner surface of the tank base (1b; 1'b).

9. Process according to any one of claims 1 to 8, for replacing a through-tube (7) arranged in any zone of a domed base (1), characterised in that a hollow shell of standard shape and dimensions is positioned and fixed on the base of the tank (1b; 1'b), irrespective of the position of the through-opening (10; 10') in the domed base (1b; 1'b).

10. Process according to any one of claims 1 to 9, characterised in that the same welding apparatus is used to weld the hollow shell (20; 20') to the base (1b; 1'b) and to deposit the metal (25) for welding the replacement through-tube (18; 18') to the hollow shell (20; 20').

11. Process according to any one of claims 1 to 10, characterised in that the replacement adapter (18; 18') has a flattened portion in its part located in the through-hole (10; 10'), so that a communication space is defined between the inner volume of the hollow shell (20; 20') and an outer zone of the domed base.

12. Process according to claim 11, characterised in that, during operation of the nuclear reactor, after it has been restarted, it is possible to detect any water present inside a chamber delimited by the hollow shell (20; 20') and the inner surface of the tank base (1b; 1'b).

13. Process according to claim 1, in the case of a tank base (1b; 1'b) covered with a stainless steel coating (11) and a breach in the base of the tank (7) which is to be replaced consisting of nickel alloy fixed to the tank base via a nickel alloy weld metal (13, 14), characterised in that, before the surface of the tank base is machined around the opening (10; 10'), after removal of the breach in the base of the tank (7) which is to be replaced, the boundary between the nickel alloy of the weld metal (13, 14) and the stainless steel of the coating layer (11) is detected.

14. Process according to any one of claims 1 to 13, characterised in that the surface (15) machined by removal of material around the opening (10; 10') is examined by a sweating test before the hollow shell (20; 20') is welded to the tank base (1b).

15. Process according to any one of claims 1 to 13, characterised in that the bore (24) in the hollow shell (20; 20') and a rebored zone (10a; 10'a) of the through-opening (10; 10') are examined by a sweating test before the replacement through-tube (18, 18') is fixed by welding.

16. Process according to any one of claims 1 to 15, characterised in that the through-tube to be replaced is a breach in the base (1b; 1'b) of the tank of a pressurised water nuclear reactor and consists of nickel alloy and the replacement through-tube (18; 18') is made of stainless steel.
